# EUROPÄISCHE PATENTSCHRIFT

(11) **EP 2 093 166 B1**
(45) Veröffentlichungstag und Bekanntmachung des Hinweises auf die Patenterteilung: **14.11.2012**
(21) Anmeldenummer: 09161165.7
(22) Anmeldetag: 19.09.2006
(51) Int. Cl.: B65G 1/04, B65G 1/137, B65G 1/08

(54) **Verfahren zum schnellen Auslagern von Stückgütern aus einem automatisierten Lager sowie automatisierte Lager hierfür**
Method for fast removal of piece goods from an automated storage and a corresponding automated storage
Procedé pour le déstockage rapide des articles d'un magasin de stockage et un magasin de stockage correspondant

(43) Veröffentlichungstag der Anmeldung: 26.08.2009
(62) Teilanmeldung aus: 06120926.8
(73) Patentinhaber: Rowa Automatisierungssysteme GmbH, 53539 Kelberg (DE)
(72) Erfinder: Wagner, Rudolf M., 54550 Daun (DE)
(74) Vertreter: Zenz

(56) Entgegenhaltungen:
- DE-A1- 19 815 883
- DE-A1- 19 946 800

## Beschreibung

Die Erfindung betrifft ein Verfahren zum Auslagern wenigstens eines Stückguts aus einem automatisierten Lager für eine Vielzahl von Stückgütern unterschiedlicher Art und Abmessungen, wobei das Lager mehrere entlang einer ersten Raumkoordinate nebeneinander angeordnete Lagerschächte, ein in der ersten Raumkoordinate und wenigstens einer dazu quer verlaufenden zweiten Raumkoordinate verfahrbares Bediengerät aufweist, wobei das Bediengerät einen Pufferschacht aufweist, der mehrere Stückgüter aufnehmen kann, wobei sich das wenigstens eine auszulagernde Stückgut an einer bekannten Position innerhalb einer Reihe von in einem Lagerschacht enthaltenen Stückgütern unterschiedlicher Art befindet. Bei dem Verfahren wird (a) ein erstes Ende des Pufferschachts an ein erstes Ende des Lagerschachts herangefahren, werden (b) das wenigstens eine auszulagernde Stückgut und sämtliche gegebenenfalls zwischen dem ersten Ende des Lagerschachts und dem wenigstens einen auszulagernden Stückgut vorhandenen Stückgüter in den Pufferschacht bewegt, wird (c) der Pufferschacht zu einer Abgabestelle zur Übernahme auszulagernder Stückgüter von dem Bediengerät gefahren und das wenigstens eine auszulagernde Stückgut in die Abgabestelle bewegt und wird (d) das erste Ende des Pufferschachts wieder an das erste Ende desselben oder eines anderen Lagerschachts herangefahren und werden die in dem Pufferschacht verbliebenen Stückgüter in den Lagerschacht hineinbewegt. Darüber hinaus betrifft die Erfindung ein automatisiertes Lager zur Ausführung dieses Verfahrens.

Ein Verfahren zum Auslagern von Stückgütern und ein automatisiertes Lager der eingangs genannten Art sind aus der (zum Anmeldezeitpunkt der vorliegenden Patentanmeldung noch unveröffentlichten) europäischen Patentanmeldung EP 05 019 718.5 derselben Anmelderin bekannt. Diese Patentanmeldung beschreibt ein automatisiertes Regallager, bei dem die Lagerschächte geneigt sind und das Bediengerät zwei Pufferschächte aufweist, die ebenfalls geneigt sind. Die Pufferschächte des Bediengeräts können aus den Lagerschächten herausrutschende Stückgüter (d. h. Arzneimittelpackungen) unterschiedlicher Art und Größe aufnehmen. Darüber hinaus ist es möglich, dass das Bediengerät die in den Pufferschächten enthaltenen unterschiedlichen Stückgüter in die Lagerschächte hinaufschiebt.

Es hat sich gezeigt, dass die in der älteren Patentanmeldung beschriebenen Auslagerungsverfahren noch relativ langsam sind. Das Bediengerät mit den zwei Pufferschächten ist aufgrund der den beiden Pufferschächten zugeordneten Ansteuervorrichtungen relativ schwer, so dass es nur relativ langsam beschleunigt werden kann. Werden - wie bei dem oben beschriebenen Verfahren - in den ersten Schacht die nicht-auszulagernden Stückgüter und in den zweiten Pufferschacht das oder die auszulagernden Stückgüter aufgenommen, so gibt es für das anschließende Auslagern grundsätzlich zwei Möglichkeiten: einerseits kann das Bediengerät mit den beiden befüllten Pufferschächten schnell zu einer Ausgabestelle fahren, wo das oder die auszulagernden Stückgüter aus dem zweiten Pufferschacht auf eine Fördereinrichtung zu einem Ausgabeplatz übergeben werden. Anschließend fährt das Bediengerät zu dem Lagerschacht zurück und schiebt die noch in dem ersten Pufferschacht befindlichen nicht-auszulagernden Stückgüter in den Lagerschacht zurück. Bei der alternativen Vorgehensweise werden die nicht-auszulagernden Stückgüter zuerst in den Lagerschacht zurückgeschoben, bevor das auszulagernde Stückgut oder die auszulagernden Stückgüter zu der Ausgabestelle transportiert werden. Im ersten Fall ergibt sich eine zusätzliche Masse durch die im ersten Pufferschacht liegenden nicht-auszulagernden Stückgüter, die die Beschleunigung weiter begrenzt (bei gleicher Kräftebeanspruchung). Im zweiten Fall ist eine zusätzliche Anfahrbewegung und das Hochschieben der nicht-auszulagernden Stückgüter in den Lagerschacht erforderlich, bevor der eigentliche Auslagerungsvorgang beginnen kann. Beide Vorgehensweisen erweisen sich als zu langsam. Verzichtet man dagegen gänzlich auf den zweiten Pufferschacht des Bediengeräts, um die Masse des Bediengeräts zu verringern, so ergibt sich folgender Ablauf: Aus dem Lagerschacht werden sowohl die nicht-auszulagernden Stückgüter als auch das auszulagernde Stückgut in den Pufferschacht des Bediengeräts aufgenommen. Dann fährt das Bediengerät mit sämtlichen Stückgütern zur Ausgabestelle, wo lediglich das auszulagernde Stückgut herausgeschoben wird. Dann fährt das Bediengerät zurück zum Lagerschacht, um die nicht-auszulagernden Stückgüter zurückzuschieben. Erst danach kann das nächste auszulagernde Stückgut (gegebenenfalls wieder mit den davor im Lagerschacht befindlichen nicht-auszulagernden Stückgütern) von dem Bediengerät aufgenommen werden und zur Ausgabestelle transportiert werden. Befinden sich die Lagerschächte mehrerer nacheinander auszulagernder Stückgüter relativ weit von der Abgabestelle entfernt und sind die Stückgüter tief innerhalb des Lagerschachts angeordnet, so dass eine gro-βe Anzahl nicht-auszulagernder Stückgüter jeweils mittransportiert werden muss, so ergibt sich insgesamt ein relativ langsamer Auslagerungsvorgang bei mehreren hintereinander auszulagernden Stückgütern.

Aus der DE 198 15 883 A1 ist eine Kommissionieranlage für Arzneimittelpackungen bekannt, wie sie im Pharma-Großhandel Anwendung findet. Dort werden regelmäßig große Mengen gleichartiger Arzneimittelpackungen kommissioniert. Aus diesem Grunde sind eine Vielzahl von Lagerschächten vorgesehen, die jeweils ausschließlich gleichartige Arzneimittelpackungen enthalten. Zusätzlich gibt es neben den Lagerschächten der eigentlichen Kommissionierautomaten noch Übervorratsregale, in deren Schächten ebenfalls jeweils gleichartige Arzneimittelpackungen gelagert sind. Zum Nachfüllen der Lagerschächte der Kommissionierautomaten wird ein Bediengerät verwendet, dass jeweils den vollständigen Stapel gleichartiger Arzneimittelpackungen aus einem Schacht der Übervorratsregale entnimmt und die Packungen des vollständigen Stapels anschließend in die Schächte des Kommissionierautomaten einfüllt.

Aufgabe der Erfindung ist es deshalb, bei dem Verfahren und dem automatisierten Lager der eingangs genannten Art die durchschnittliche Auslagergeschwindigkeit (bzw. die durchschnittliche Auslagerfrequenz) zu erhöhen.

Diese Aufgabe wird erfindungsgemäß durch ein Verfahren mit den Merkmalen des Anspruchs 1 bzw. ein automatisiertes Lager mit den Merkmalen des Anspruchs 4 gelöst.

Die erfindungsgemäße Lösung sieht vor, dass mehrere Abgabestellen in dem Regallager entlang der ersten Raumkoordinate etwa gleichmäßig verteilt angeordnet sind und an den Abgabestellen übernommene Stückgüter an eine sich entlang des Regals erstreckende Fördereinrichtung übergeben werden, wobei der mit dem wenigstens einen auszulagernden Stückgut und sämtlichen gegebenenfalls davor angeordneten nicht-auszulagernden Stückgütern beladene Pufferschacht zu einer nächstliegenden Abgabestelle gefahren und das wenigstens eine auszulagernde Stückgut aus dem Pufferschacht in die nächstliegende Abgabestelle bewegt wird, wonach das auszulagernde Stückgut oder die auszulagernden Stückgüter von der Abgabestelle mittels der sich entlang des Regals erstreckenden Fördereinrichtung zu einem Ausgabeplatz transportiert wird bzw. werden. Beispielsweise sind Abgabestellen in Abständen von jeweils 20cm bis 1m vorgesehen. Vorzugsweise ist die Fördereinrichtung ein sich entlang der ersten Raumkoordinate des Regals erstreckendes Förderband (auch ein Rollenförderer ist denkbar), so dass praktisch eine Vielzahl von Abgabestellen entlang des Förderbands (praktisch eine einzige kontinuierliche Abgabestelle entlang des gesamten Förderbands) gebildet werden. Bereits die gleichmäßige (äquidistante) Verteilung mehrerer Abgabestellen entlang des Regallagers bewirkt eine Geschwindigkeitssteigerung, da die Transportwege erheblich verkürzt werden. Wird gar ein Förderband verwendet, das sich entlang des gesamten Regals erstreckt, so braucht das Bediengerät für den Transport des aus dem Lagerschacht ausgelagerten Stückguts zu der Abgabestelle nur noch senkrecht verfahren zu werden.

Vorteilhafte und/oder bevorzugte Weiterbildungen sind in den Unteransprüchen gekennzeichnet.

Soweit hier und in den Ansprüchen von einer "Raumkoordinate" gesprochen wird, sollen unter den Begriff grundsätzlich auch gekrümmte Koordinaten fallen. Beispielsweise können die Lagerschächte/Regalböden entlang einer bogenförmigen ersten Raumkoordinate angeordnet sein. Ein "Pufferschacht" soll irgendeine Auflage oder Halterung für die Stückgüter sein, in der die Stückgüter, sofern mehrere enthalten sind, in einer Reihenfolge angeordnet sind, die der Reihenfolge ihrer Aufnahme in den Puffer entspricht.

Im folgenden wird die Erfindung anhand von in den Zeichnungen dargestellten bevorzugten Ausführungsformen näher erläutert. In den Zeichnungen zeigen:
Fig. 1.: eine schematische Seitenansicht des erfindungsgemäßen automatisierten Lagers; und
Fig. 2: eine schematische Seitenansicht einer Ergänzung des erfindungsgemäßen automatisierten Lagers.

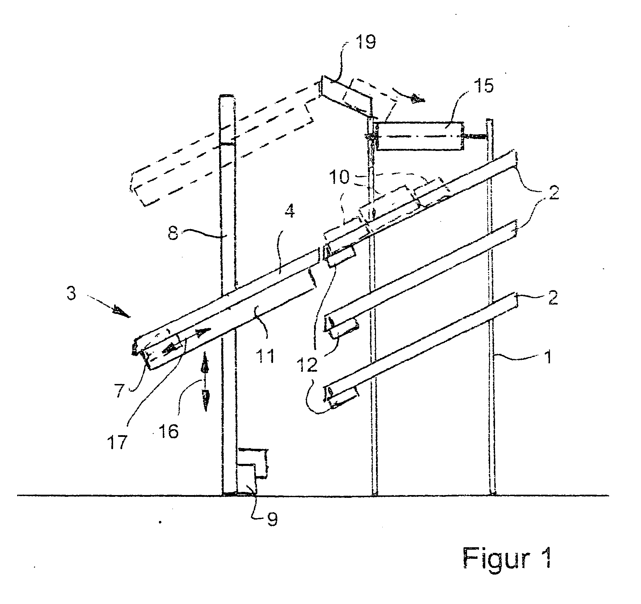

Die in Figur 1 schematisch dargestellte Ausführungsform eines automatisierten Lagers für eine Vielzahl von Stückgütern unterschiedlicher Art und Abmessungen, insbesondere für eine Vielzahl unterschiedlicher Arzneimittelpackungen, umfasst ein als Regal 1 bezeichnetes Gestell mit mehreren Lagerschächten 2. Die Lagerschächte sind vorzugsweise in Lagerebenen nebeneinander angeordnet, wobei jeweils mehrere Lagerebenen übereinander angeordnet sind. Es sind eine Vielzahl von Ausführungsformen für die Lagerschächte, die Lagerebenen und das tragende Gestell denkbar. Bei dem in Figur 1 dargestellten Regal 1 stehen die senkrechten Stützen auf einem Boden. Sie können aber auch an einer Wand montiert sein. Die Lagerschächte 2 werden beispielsweise aus Führungs- und Halteschienen gebildet, die auf zwischen senkrechten Stützen montierten waagerechten Traversen befestigt sind. In einem einfachen Fall werden die Lagerschächte 2 durch zwei L-förmige oder T-förmige Profilstangen gebildet, die einen vorgegebenen Abstand haben. Die Breite der Lagerschächte, das heißt der Abstand der seitlichen Begrenzungswände, ist an die jeweils aufzunehmenden Stückgüter 10 (Arzneimittelpackungen) angepasst. Vorzugsweise sind in einem Regal eine vorgegebene Anzahl unterschiedlicher Breiten vorgesehen, wobei Lagerschächte unterschiedlichster Breite nebeneinander in einer Lagerebene angeordnet sein können. Es ist aber auch denkbar, dass in einer Lagerebene oder einem Teil der Lagerebene mehrere Lagerschächte jeweils gleicher Breite nebeneinander angeordnet werden. Die Verteilung und die Auswahl der Breiten der Lagerschächte hängt von den erwarteten Abmaßen der Stückgüter ab und wird bei der Installation des Regals eingestellt. Die Breiteneinstellungen sind vorzugsweise variabel und können bei einer Ausführungsform auch durch eine Steuereinrichtung automatisch angepasst werden.

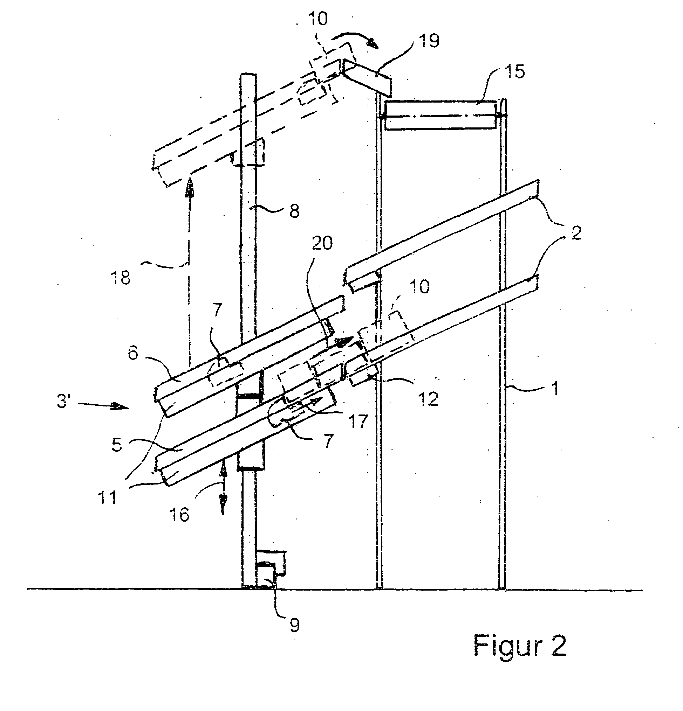

Bei den in den Figuren 1 und 2 dargestellten Ausführungsformen sind die Lagerschächte 2 geneigt. Dabei rutschen die in den Lagerschächten 2 befindlichen Stückgüter 10 nach unten gegen einen von einer Sperr- und Auslöseeinrichtung 12 gebildeten Anschlag.

Vor den unteren Enden der Lagerschächte 2 kann ein Bediengerät 3 verfahren werden, wobei das Bediengerät 3 zum Auslagern der Stückgüter 10 aus den Lagerschächten 2 und vorzugsweise auch zum Einlagern der Stückgüter 10 in die Lagerschächte 2 dient. Das Bediengerät 3 weist bei der in Figur 1 gezeigten Ausführungsform einen Pufferschacht 4 und bei der in Figur 2 skizzierten Ausführungsform zwei Pufferschächte 5 und 6 auf. Die Pufferschächte 4, 5 und 6 sind vorzugsweise ebenfalls geneigt, wobei die Neigung vorzugsweise an die der Lagerschächte 2 angepasst ist. Das obere Ende eines Pufferschachts 4, 5, 6 kann an das untere Ende eines Lagerschachts 2 derart herangefahren werden, dass die in dem Lagerschacht 2 enthaltenen Stückgüter 10 beim Betätigen der Sperr- und Auslöseeinrichtung 12 des Lagerschachts 2 in den Pufferschacht 4, 5 oder 6 rutschen. Die Sperr- und Auslöseeinrichtung 12 kann eine aktive Auslöseeinrichtung sein, die durch elektrische Steuersignale angesteuert wird, wobei jeder Lagerschacht mit einer eigenen Auslöseeinrichtung 12 versehen ist und ihm ein separates Steuersignal zugeführt wird. Alternativ kann die Sperr- und Auslöseeinrichtung passiv sein, das heißt von dem herangefahrenen Bediengerät 3 dann betätigt werden, wenn sich der Pufferschacht in einer zur Aufnahme eines Stückguts geeigneten Position befindet. Bei einem einfachen Fall einer passiven Sperr- und Auslöseeinrichtung 12 wird diese von einem in den Lagerschacht 2 hineinfahrenden Schwenkhebel gebildet, wobei der Schwenkhebel von einem Betätigungsfinger des Bediengeräts 3 betätigt wird. Bei einer anderen einfachen Ausführungsform ist die in den Pufferschacht 2 hineinfahrende Sperre am Gestell des Regals 1 befestigt und unbeweglich, wobei zum Auslösen der Sperre das untere Ende des Lagerschachts 2 von einem Betätigungsfinger des Bediengeräts 3 derart angehoben wird, dass die Sperre aus dem Lagerschacht 2 herausbewegt wird.

Das den Pufferschacht 4 aufweisende Bediengerät 3 ist an einer senkrechten Führungsschiene 8 montiert, wobei die Führungsschiene 8 an einer oder mehreren waagerechten Führungsschienen 9 gehalten wird und mit Hilfe eines (nicht gezeigten) Antriebs waagerecht verfahren werden kann. Die waagerechte Führungsschiene 9 braucht nicht geradlinig angeordnet zu sein; es sind auch Kurvenführungen denkbar. Ähnliches gilt für die senkrechte Führungsschiene; es sind auch Ausführungsformen mit schrägen Führungsschienen denkbar. Das Bediengerät 3 weist mehrere Antriebe und Steuereinrichtungen auf, die in Figur 1 mit dem Bezugszeichen 11 zusammengefasst sind, wobei Steuereinrichtungen und Antriebe zum senkrechten Bewegen des Bediengeräts an der Führungsschiene 8 und Steuereinrichtungen und Antriebe zum Drehen des Pufferschachts 4 (beispielsweise um 180° zum einem in Figur 1 nicht gezeigten zweiten Regal gegenüber dem ersten Regal 1) sowie Steuereinrichtungen und Antriebe zum Betätigen eines Schiebers 7 zum Hochschieben von in dem Pufferschacht 4 einliegenden Stückgütern 10 (zum Einlagern in den Lagerschacht 2) vorgesehen sein können. Die senkrechte Bewegung des Bediengeräts 3 entlang der Führungsschiene 8 ist durch den Pfeil 16 und die Bewegung des Schiebers 7 zum Hinaufschieben der Stückgüter 10 durch den Pfeil 17 veranschaulicht.

Bei der Ausführungsform der Figur 2 sind die für die Figur 1 bereits beschriebenen Elemente mit den gleichen Bezugszeichen gekennzeichnet. Das in Figur 2 dargestellte Bediengerät 3' unterscheidet sich von den in der Figur 1 dargestellten Bediengerät 3 dadurch, dass es einen ersten Pufferschacht 5 und einen darüber angeordneten zweiten Pufferschacht 6 aufweist. Insbesondere bei der weiter unten beschriebenen schnellen Auslagerung von Stückgütern 10 aus einem Lagerschacht 2 kommen den beiden Pufferschächten 5 und 6 des Bediengeräts 3' gemäß Figur 3 unterschiedliche Funktionen zu. Erfindungsgemäß ist der zweite Pufferschacht 6 nicht nur gemeinsam mit den ersten Pufferschacht 5 entlang der Führungsschiene 8 senkrecht bewegbar; der zweite Pufferschacht 6 ist auch unabhängig von dem ersten Pufferschacht 5 senkrecht bewegbar. So kann der zweite Pufferschacht 6 über dem ersten Pufferschacht 5 entlang der Führungsschiene 8 nach oben bewegt werden, während der erste Pufferschacht 5 an einer vorgegebenen Position verbleibt. Das unabhängige Aufwärtsbewegen des zweiten Pufferschachts 6 ist durch den in Strichlinie gezeichneten Pfeil 18 veranschaulicht.

Bei den dargestellten Ausführungsformen sind die Lagerschächte 2 vorzugsweise gemischt, das heißt mit Stückgütern unterschiedlicher Art und auch unterschiedlicher Abmessungen, gefüllt. Die Stückgüter sind dabei vorzugsweise solche, die weniger häufig und nur in geringer Stückzahl ausgegeben werden (sogenannte "Langsamdreher"). Vorzugsweise weist das automatisierte Lager darüber hinaus Lagerschächte für Stückgüter auf, die relativ häufig und/oder jeweils in größerer Stückzahl benötigt werden (sogenannte "Schnelldreher"). Diese (in den Figuren nicht dargestellten) Lagerschächte enthalten dann jeweils eine Mehrzahl von Stückgütern gleicher Art und Dimensionen. Bei einer bevorzugten Ausführungsform des automatisierten Lagers sind diese Schnelldreher-Lagerschächte im Unterschied zu den in den Figuren gezeigten Langsamdreher-Lagerschächten 2 nicht zur Gasse des Bediengeräts hin geneigt, sondern fallen von der Gasse des Bediengeräts 3 ab, so dass das obere Ende der Schnelldreher-Lagerschächte der Gasse des Bediengeräts 3 zugewandt ist.

Bei dem erfindungsgemäßen automatisierten Lager sind mehrere Abgabestellen entlang des Regals 1, das heißt entlang der sich in die Tiefe der Skizze gemäß Figur 1 erstreckenden Raumkoordinate, etwa gleichmäßig verteilt angeordnet. Dies bedeutet, dass die mehreren Abgabestellen beispielsweise äquidistant angeordnet sind. Dies ist insbesondere dann vorgesehen, wenn das Regal 1 über sein gesamte Länge etwa gleichmäßig mit Stückgütern 10 oder Lagerschächten 2 bestückt werden kann. Für den Fall, dass das Regal von vornherein so ausgelegt ist, dass in einem ersten Abschnitt eine größere Anzahl (Dichte) von Lagerschächten 2 vorgesehen ist und in einem daneben angeordneten Abschnitt eine geringere Anzahl (Dichte), so kann die erfindungsgemäße gleichmäßige Beabstandung der Abgabestellen auch bedeuten, dass die Abgabestellen gleichmäßig bezogen auf die Anzahl der zugeordneten Lagerschächte beabstandet sind, das heißt dort, wo eine größere Anzahl von Lagerschächten pro Regallänge vorgesehen ist, auch die Abgabestellen dichter, das heißt mit geringerem Abstand, angeordnet sind. Aus diesem Grund wurde auch in der allgemeinsten Formulierung des Anspruchs der Begriff der "etwa gleichmäßig" verteilten Anordnung und nicht etwa der Begriff der "äquidistanten" Anordnung gewählt, da eine äquidistante Anordnung nur der häufigste Spezialfall ist, bei dem die Anzahl der Lagerschächte pro Regallänge entweder außer Betracht bleibt oder etwa konstant ist.

Vorzugsweise sind nicht nur lediglich mehrere Abgabestellen entlang des Regals gleichmäßig verteilt angeordnet, sondern es sind eine Vielzahl von Abgabestellen vorgesehen. Bei der bevorzugten Ausführungsform, die auch in Figur 1 skizziert ist, wird die Vielzahl von Abgabestellen, die durch das Bediengerät 3 ansteuerbar sind, dadurch gebildet, dass sich eine Fördereinrichtung, beispielsweise ein Förderband, über die gesamte Länge des Regals erstreckt, wobei das Förderband 15 beispielsweise oberhalb des Regals 1 angeordnet ist. Das Bediengerät 3 kann dann auszulagernde Stückgüter praktisch an jeder Stelle entlang des Regals 1 auf das Förderband 15 übergeben, so dass man von einer Vielzahl von möglichen Abgabestellen entlang des Förderbands 15 sprechen kann.

Anstelle des Förderbands 15 könnten auch mehrere Rutschen und andere Transporteinrichtungen vorgesehen sein, bei denen die Übergabeorte für das Bediengerät 3 gleichmäßig verteilt entlang des Regals 1 angeordnet sind. Sämtliche Transporteinrichtungen transportieren die übergebenen Stückgüter zu einen Ausgabeplatz. Bei Verwendung des Förderbands kann dieses auch unter den Lagerschächten 2 des Regals 1 oder zwischen den Lagerschächten 2 angeordnet sein.

Zur Auslagerung eines Stückguts aus dem automatisierten Lager wird wie folgt vorgegangen. Das auszulagernde Stückgut befindet sich beispielsweise an einer vorgegebenen Position inmitten einer Reihe von Stückgütern 10 in einem Lagerschacht 2. Zunächst wird das Bediengerät zusammen mit der senkrechten Führungsschiene entlang der Gasse und dann entlang der Führungsschiene 8 derart verfahren, dass sich das obere Ende des Pufferschachts 4 an dem unteren Ende desjenigen Lagerschachts 2 befindet, in dem das auszulagernde Stückgut gelagert ist. Dann wird die am unteren Ende des Lagerschachts 2 angeordnete Sperre 12 freigegeben, so dass das auszulagernde Stückgut und sämtliche zwischen dem unteren Ende des Lagerschachts 2 und dem auszulagernden Stückgut vorhandenen Stückgüter in den Pufferschacht 4 hineinrutschen. Sollten noch weitere, oberhalb des gewünschten Stückguts angeordnete Stückgüter aus dem Lagerschacht 2 in den Pufferschacht 4 hineinrutschen, so werden diese sofort hinter die Sperre 12 zurückgeschoben. Anschließend wird das Bediengerät 3 mit dem Pufferschacht 4 und den darin befindlichen Stückgütern 10 zu der nächstliegenden Abgabestelle gefahren. Bei dem in Figur 1 dargestellten Fall, bei dem sich ein Förderband 15 über die gesamte Länge des Regals 1 erstreckt, wird das Bediengerät 3 lediglich senkrecht nach oben gefahren, so dass sich das obere Ende des Pufferschachts 4 an dem oberen Ende einer Rutsche 19 befindet, auf die das auszulagernde Stückgut durch Hochschieben des Schiebers 17 übergeben wird. Die Rutsche erstreckt sich vorzugsweise ebenfalls über die gesamte Länge des Regals 1. Bei einer alternativen Ausführungsform kann die Rutsche 19 auch entfallen, wobei dann das auszulagernde Stückgut vom oberen Ende des Pufferschachts 4 direkt auf das Förderband 15 übergeben wird.

Anschließend fährt das Bediengerät 3 wieder zurück zu dem Lagerschacht 2, vorzugsweise einfach senkrecht nach unten, und schiebt die nicht auszulagernden Stückgüter zurück in den Lagerschacht 2. Es ist auch denkbar, dass die Stückgüter in einen anderen Lagerschacht 2 zurückgeschoben werden. Selbstverständlich verfolgt eine computergestützte Steuereinrichtung ständig die Lagerpositionen der Stückgüter 10 einschließlich der jeweiligen Positionen innerhalb des Pufferschachts 4.

Bei einer alternativen Ausführungsform des automatisierten Lagers gemäß Figur 2 weist das Bediengerät zwei Pufferschächte auf. Auch hier sind - wie bei der Ausführungsform gemäß Figur 1 - mehrere Abgabestellen vorgesehen, die beispielsweise als ein sich über die gesamte Länge des Regals 1 erstreckendes Förderband 15 ausgebildet sind. Wesentliches Merkmals dieser Ausführungsform ist es, dass der zweite Pufferschacht 6, der bei der Ausführungsform gemäß Figur 3 oberhalb des ersten Pufferschachts 5 angeordnet ist, relativ zu dem ersten Pufferschacht 5 an dem Bediengerät 3 bewegbar ist. Dies erlaubt das nachfolgend beschriebene Auslagerungsverfahren.

Zunächst wird das Bediengerät 3 entlang der senkrechten Führungsschiene 8 und diese wiederum entlang der waagerechten Führungsschiene 9 derart verfahren, dass sich das obere Ende des ersten Pufferschachts 5 an dem unteren Ende desjenigen Lagerschachts 2 befindet, aus dem ein Stückgut ausgelagert werden soll. Es sei angenommen, dass sich das auszulagernde Stückgut innerhalb einer Reihe von in dem Lagerschacht 2 angeordneten Stückgüter befindet. Dann wird die am unteren Ende des Lagerschachts 2 angeordnete Sperr- und Auslöseeinrichtung 12 derart betätigt, dass sich sämtliche unterhalb des auszulagernden Stückguts in dem Lagerschacht 2 befindliche Stückgüter in den ersten Pufferschacht 5 bewegen. Dann wird das Bediengerät 3' derart bewegt, dass das obere Ende des zweiten Lagerschachts 6 an dem unteren Ende des Lagerschachts positioniert wird, in dem sich nunmehr das auszulagernde Stückgut an der untersten Position, das heißt unmittelbar an der Sperr- und Auslöseeinrichtung 12 befindet. Dann wird die Sperr- und Auslöseeinrichtung betätigt, so dass das auszulagernde Stückgut in dem zweiten Pufferschacht 6 rutscht. Sofern jeweils nur ein Stückgut auf diese Weise ausgelagert werden soll, braucht den zweite Pufferschacht 6 lediglich so ausgebildet zu sein, dass er ein Stückgut aufnehmen kann. Da in diesem Fall stets nur ein Stückgut aufzunehmen ist, soll unter den Begriff des "zweiten Pufferschachts" auch jede beliebige Einrichtung fallen, die in der Lage ist, ein Stückgut aufzunehmen (obwohl in diesem Fall eigentlich nicht mehr von einem "Schacht" gesprochen werden kann).

Sofern mehrere auszulagernde Stückgüter in demselben Schacht 2 unmittelbar hintereinander angeordnet sind, können diese auch unmittelbar hintereinander in den zweiten Pufferschacht 6 aufgenommen werden.

Anschließend wird der zweite Pufferschacht zu einer nächstliegenden Abgabestelle gefahren, vorzugsweise - wie in Figur 2 gestrichelt dargestellt ist - entlang des Pfeils 18 nach oben zu einer Rutsche 19 gefahren, wo das auszulagernde Stückgut 10 (oder die auszulagernden Stückgüter) auf ein sich entlang des Regals 1 erstreckendes Förderband 15 übergeben wird. Es ist denkbar, dass der zweite Pufferschacht 6 auf seinen Weg nach oben einen Zwischenstopp bei einem weiteren Lagerschacht 2 einlegt, um dort gegebenenfalls weitere auszulagernde Stückgüter, die sich unmittelbar an der jeweiligen Sperre 12 befinden, aufzunehmen.

Während der zweite Pufferschacht 6 zu einer nächstliegenden Abgabestelle gefahren wird, wird das obere Endes des ersten Pufferschachts 5 wieder an das untere Ende desjenigen Lagerschachts 2 herangefahren, aus dem die nicht auszulagernden Stückgüter aufgenommen wurden. Die in dem ersten Pufferschacht 5 enthaltenen Stückgüter 10 werden dann zurück in den Lagerschacht 2 geschoben, wie es in Figur 2 durch den Pfeil 20 angedeutet ist. Es ist auch denkbar, dass die in dem ersten Pufferschacht 5 enthaltenen Stückgüter in einen anderen Lagerschacht 2 eingeschoben werden oder dass ein Teil der darin enthaltenen Stückgüter in einen ersten Lagerschacht 2 und der verbleibende Teil in einen zweiten Lagerschacht 2 hineingeschoben werden. Die Vorgänge des Aufnehmens nicht auszulagernder Stückgüter aus Lagerschächten 2 in den ersten Pufferschacht 5 und des Aufnehmens auszulagernder Stückgüter durch den Pufferschacht 6 sowie des Zurückschiebens nicht auszulagernder Stückgüter in die Lagerschächte 2 und des Übergebens auszulagernder Stückgüter an die Abgabestellen bzw. das Transportband 15 können sich auf vielfältige Weise überlappen. Eine elektronische Steuereinrichtung sorgt hier für eine Optimierung, um möglichst kurze Fahrwege und somit eine hohe Auslagerungsfrequenz zu erreichen.

Bei alternativen Ausführungsformen kann der zweite Pufferschacht 6 auch unter dem ersten Pufferschacht 5 angeordnet sein, wobei dann das Förderband 15 unterhalb der Lagerschächte 2 angeordnet wäre. Es sind auch Ausführungsformen denkbar, bei denen der erste Pufferschacht 5 und der zweite Pufferschacht 6 derart an der senkrechten Führungsschiene bzw. dem Bediengerät 3 befestigt sind, dass sie senkrecht aneinander vorbeifahren können. Darüber hinaus kann der erste Pufferschacht auf der einen Seite der Führungsschiene und der zweite Pufferschacht auf der anderen Seite der Führungsschiene angeordnet sein. Steuerungstechnisch besteht die Möglichkeit, dass der zweite Pufferschacht stets relativ zu dem ersten Pufferschacht 5 bewegt wird oder dass alternativ beide Pufferschächte unabhängig voneinander relativ zu der senkrechten Führungsschiene 8 bewegt werden.

Bei einer weniger bevorzugten alternativen Ausführungsform können die Lagerschächte auch waagerecht angeordnet und Greifeinrichtungen an den Pufferschächten der Bediengeräte vorgesehen sein, die die hintereinander in den Lagerschächten angeordneten Stückgüter in die jeweiligen Pufferschächte ziehen. Auch kann an den Lagerschächten selbst eine Schiebeeinrichtung angeordnet sein, die die in dem Lagerschacht enthaltenen Stückgüter hinausschiebt, wobei die Schiebeeinrichtung entweder aktiv gesteuert oder von dem Bediengerät betätigt sein kann. Die Pufferschächte des Bediengeräts können bei diesen Ausführungsformen ebenfalls waagerechte Auflageteller sein, die beidseitig von Backengreifern oder Führungsschienen begrenzt werden. Bei dieser Ausführungsform läuft das Auslagerungsverfahren wie folgt ab: Zunächst wird der erste waagerechte Pufferschacht an den Lagerschacht herangefahren, in dem sich, beispielsweise an der vierten Position, das auszulagernde Stückgut befindet. Der Backengreifer des ersten Pufferschachts (Auflagetellers) wird soweit in den Lagerschacht hineingefahren, dass er die vordersten (beispielsweise drei) Stückgüter greifen kann, die vor dem auszulagernden Stückgut lagern. Diese werden dann in den ersten Pufferschacht (das heißt auf den ersten Auflageteller) gezogen. Anschließend wird der zweite Pufferschacht (zweite Auflageteller) an dem Lagerschacht (Lagerfach) positioniert. Der Backengreifer des zweiten Pufferschachts greift dann das auszulagernde Stückgut und zieht dies auf den Auflageteller des zweiten Pufferschachts. Anschließend wird der zweite Pufferschacht zu der Abgabestelle gefahren (beispielsweise oberhalb des Regals), während der erste Pufferschacht mit den nicht auszulagernden Stückgütern wieder zurück zu dem Lagerschacht gefahren wird und die nicht auszulagernden Stückgüter in den Lagerschacht zurückgeschoben werden.

## Patentansprüche

1. Verfahren zum Auslagern wenigstens eines Stückguts (10) aus einem automatisierten Lager für eine Vielzahl von Stückgütern (10) unterschiedlicher Art und Abmessungen,
wobei das Lager mehrere entlang einer ersten Raumkoordinate nebeneinander angeordnete Lagerschächte (2), ein in der ersten Raumkoordinate und wenigstens in einer dazu quer verlaufenden zweiten Raumkoordinate verfahrbares Bediengerät (3) aufweist,
wobei das Bediengerät (3) einen Pufferschacht (4, 5, 6) aufweist, der mehrere Stückgüter (10) aufnehmen kann,
wobei sich das wenigstens eine auszulagernde Stückgut (10) an einer bekannten Position innerhalb einer Reihe von in einem Lagerschacht (2) enthaltenen Stückgütern (10) unterschiedlicher Art befindet,
wobei:
a) ein erstes Ende des Pufferschachts (4, 5, 6) an ein erstes Ende des Lagerschachts (2) herangefahren wird,
b) das wenigstens eine auszulagernde Stückgut (10) und sämtliche gegebenenfalls zwischen dem ersten Ende des Lagerschachts (2) und dem wenigstens einen auszulagernden Stückgut vorhandenen Stückgüter (10) in den Pufferschacht (4, 5, 6) bewegt werden,
c) der Pufferschacht (4, 5, 6) zu einer Abgabestelle zur Übernahme auszulagernder Stückgüter (10) von dem Bediengerät (3) gefahren und das wenigstens eine auszulagernde Stückgut (10) in die Abgabestelle bewegt wird,
d) das erste Ende des Pufferschachts (4, 5, 6) wieder an das erste Ende desselben oder eines anderen Lagerschachts herangefahren wird und die in dem Pufferschacht (4, 5, 6) verbliebenen Stückgüter (10) in den Lagerschacht hineinbewegt werden,
**dadurch gekennzeichnet,**
**dass** mehrere Abgabestellen in dem Regallager entlang der ersten Raumkoordinate etwa gleichmäßig verteilt angeordnet sind und an den Abgabestellen übernommene Stückgüter (10) an eine sich entlang des Regals (1) erstreckende Fördereinrichtung (15) übergeben werden,
**dass** im Schritt c) der Pufferschacht (4, 5, 6) zu einer nächstliegenden Abgabestelle gefahren und das wenigstens eine auszulagernde Stückgut (10) aus dem Pufferschacht (4, 5, 6) in die nächstliegende Abgabestelle bewegt wird, und
**dass** das auszulagernde Stückgut (10) oder die auszulagernden Stückgüter (10) von der Abgabestelle mittels der sich entlang des Regals (1) erstreckenden Fördereinrichtung (15) zu einem Ausgabeplatz transportiert wird bzw. werden.

2. Verfahren zum Auslagern eines Stückguts aus einem automatisierten Lager nach Anspruch 1, **dadurch gekennzeichnet, dass** die Lagerschächte (2) geneigte Lagerschächte sind,
wobei das erste Ende des Lagerschachts (2) das untere Ende ist und jeder Lagerschacht (2) an dem unteren Ende eine Sperre (12) zum Halten der in dem Lagerschacht (2) liegenden Stückgüter (10) aufweist,
wobei im Schritt b) die Sperre (12) derart freigegeben wird, dass das auszulagernde Stückgut (10) und sämtliche gegebenenfalls in dem Lagerschacht (2) unterhalb des auszulagernden Stückguts (10) vorhandenen Stückgüter (10) in den Pufferschacht (4, 5, 6) eintreten,
wobei im Schritt d) das erste Ende des Pufferschachts (4, 5, 6) an das untere Ende des Lagerschachts (2) herangefahren wird und die in dem Pufferschacht (4, 5, 6) enthaltenen Stückgüter (10) in den Lagerschacht (2) hinaufgeschoben werden.

3. Verfahren zum Auslagern eines Stückguts aus einem automatisierten Lager nach Anspruch 1 oder 2, **dadurch gekennzeichnet, dass** ein sich entlang der ersten Raumkoordinate des Regals erstreckendes Förderband (15) zur Aufnahme von aus dem Pufferschacht (4, 5, 6) austretenden Stückgütern (10) vorgesehen ist, so dass entlang des Förderbands (15) eine Vielzahl von Abgabestellen gebildet wird.

4. Automatisiertes Lager für eine Vielzahl von Stückgütern (10) unterschiedlicher Art und Abmessungen,
wobei das Lager wenigstens ein Regal (1) aus mehreren Lagerebenen, die jeweils mehrere entlang einer ersten Raumkoordinate nebeneinander angeordnete Lagerschächte (2) aufweisen, ein vor dem Regal in der ersten Raumkoordinate und wenigstens in einer dazu quer verlaufenden zweiten Raumkoordinate verfahrbares Bediengerät (3) und eine Vielzahl von Abgabestellen, die entlang des Regals (1) in der ersten Raumkoordinate etwa gleichmäßig verteilt angeordnet sind und die zur Übernahme auszulagernder Stückgüter (10) von dem Bediengerät (3) ansteuerbar sind, aufweist,
wobei zumindest in einem Teil der Lagerschächte (2) jeweils Stückgüter (10) unterschiedlicher Art gelagert sind,
wobei das Bediengerät (3) einen Pufferschacht (4, 5, 6), der mehrere Stückgüter (10) aufnehmen kann, und Steuereinrichtungen (11) aufweist, die zur Auslagerung wenigstens eines Stückgutes (10) derart ausgelegt sind,
- dass das Bediengerät (3) derart verfahren wird, dass sich das obere Ende des Pufferschachts (4) an dem unteren Ende desjenigen Lagerschachts (2) befindet, in dem ein auszulagerndes Stückgut gelagert ist, so dass das wenigstens eine auszulagernde Stückgut (10) und sämtliche gegebenenfalls zwischen dem unteren Ende des Lagerschachts und dem auszulagernden Stückgut vorhandene Stückgüter in den Pufferschacht bewegt werden,
- dass anschließend durch die Steuereinrichtungen (11) das Bediengerät (3) mit dem Pufferschacht (4) und den darin befindlichen Stückgütern (10) zu der nächstliegenden Abgabestelle gefahren wird,
- dass das wenigstens eine auszulagernde Stückgut (10) aus dem Pufferschacht (4) in die nächstliegende Abgabestelle bewegt wird, an der das auszulagernde Stückgut (10) oder die auszulagernden Stückgüter (10) von der Abgabestelle mittels einer sich entlang des Regals in der ersten Raumkoordinate erstreckenden Fördereinrichtung (15) zu einem Ausgabeplatz transportiert wird bzw. werden, und
- dass anschließend das Bediengerät (3) wieder zurück zu dem Lagerschacht (2) oder einen anderen Lagerschacht (2) gefahren wird und die nicht auszulagernden Stückgüter (10) in den Lagerschacht (2) geschoben werden.

5. Automatisiertes Lager nach Anspruch 4, **dadurch gekennzeichnet, dass** die Fördereinrichtung ein sich über die Länge des Regals (1) erstreckendes Förderband (15) oder eine sich über die Länge des Regals erstreckende Rollenbahn ist, so dass eine Vielzahl von Abgabestellen entlang des Regals (1) gebildet sind.

6. Automatisiertes Lager nach Anspruch 5, **dadurch gekennzeichnet, dass** das Förderband bzw. die Rollenbahn parallel zu den Lagerebenen und über der obersten Lagerebene angeordnet ist.

## Claims

1. A method of removing at least one piece good (10) from an automated store for a plurality of piece goods (10) of different type and dimensions,
wherein the store includes a plurality of storage shafts (2), which are arranged next to one another along a first spatial coordinate, and a service device (3), which is movable in the first spatial coordinate and at least in one second spatial coordinate extending transversely thereto,
wherein the service device (3) includes a buffer shaft (4, 5, 6), which can accommodate a plurality of piece goods (10),
wherein the at least one piece good (10) to be removed from the store is situated at a known position within a series of piece goods of different type contained in a storage shaft (2),
wherein:
a) a first end of the buffer shaft (4, 5, 6) is advanced to a first end of the storage shaft (2),
b) the at least one piece good (10) to be removed from the store and all the piece goods (10) potentially present between the first end of the storage shaft (2) and the at least one piece good to be removed from the store are moved into the buffer shaft (4, 5, 6),
c) the buffer shaft (4, 5, 6) is moved to a discharge position for taking over piece goods (10) which are to be removed from the store by the service device (3) and the at least one piece good (10) which is to be removed from the store is moved into the discharge position,
d) the first end of the buffer shaft (4, 5, 6) is advanced again to the first end of the same or another storage shaft and the piece goods (10) remaining in the buffer shaft (4, 5, 6) are moved into the storage shaft,
**characterised in**
**that** a plurality of discharge positions are arranged approximately uniformly distributed in the rack store along the first spatial coordinate and piece goods (10) are taken over at the discharge positions are transferred to a conveyor device (15) extending along the rack (1),
**that** in step c) the buffer shaft (4, 5, 6) is moved to a closest discharge position and the at least one piece good (10) to be removed from the store is moved out of the buffer shaft (4, 5, 6) into the nearest discharge position, and
**that** the piece good (10) or the piece goods (10) to be removed from the store is or are transported from the discharge position by means of the conveyor device (15) extending along the rack (1) to an output station.

2. A method of removing a piece good from an automated store as claimed in claim 1, **characterised in that** the storage shafts (2) are inclined storage shafts
wherein the first end of the storage shaft (2) is the lower end and each storage shaft (2) includes a barrier (12) at the lower end for retaining the piece goods (10) situated in the storage shaft (2),
wherein in step b) the barrier (12) is released such that the piece good (10) to be removed from the store and all the piece goods (10) potentially present in the storage shaft (2) below the piece good (10) to be removed from the store move into the buffer shaft (4, 5, 6),
wherein in step d) the first end of the buffer shaft (4, 5, 6) is advanced to the lower end of the storage shaft (2) and the piece goods (10) contained in the buffer shaft (4, 5, 6) are pushed up into the storage shaft (2).

3. A method removing a piece good from an automated store as claimed in claim 1 or 2, **characterised in that** a conveyor belt (15), which extends along the first spatial coordinate of the rack, for receiving piece goods leaving the buffer shaft (4, 5, 6) is provided so that a plurality of delivery positions is defined along the conveyor belt (15).

4. An automated store for a plurality of piece goods (10) of different type and dimensions,
wherein the store includes at least one rack (1) consisting of a plurality of storage planes, which each include a plurality of storage shafts (2) next to one another along a first spatial coordinate, a service device (3) which is movable in front of the rack in the first spatial coordinate and at least in one second spatial coordinate extending transversly thereto and a plurality of delivery positions, which are approximately uniformly distributed along the rack (1) in the first spatial coordinate and are controllable to accept piece goods (10) to be removed from the store by the service device (3),
wherein piece goods (10) of different types are stored in at least a proportion of the storage shafts (2),
wherein the service device (3) includes a buffer shaft (4, 5, 6) which can accommodate a plurality of piece goods (10), and control devices (11), which are constructed to remove at least one piece good (10) from the store such that:
- the service device (3) is moved such that the upper end of the buffer shaft (4) is situated at the lower end of that storage shaft (2) in which a piece good to be removed from the store is stored so that the at least one piece good (10) to be removed from the store and all of the piece goods potentially present between the lower end of the storage shaft and the piece good to be removed from the store are moved into the buffer shaft,
- that the service device (3) is then moved by the control devices (11) together with the buffer shaft (4) and the piece goods (10) situated therein to the closest delivery position,
- that the at least one piece good (10) to be removed from the store is moved out of the buffer shaft (4) into the closest delivery position at which the piece good or the piece goods (10) to be removed from the store is or are transported from the delivery position by means of a conveyor device (15) extending along the rack in the first spatial coordinate to a discharge station, and
- that the service device (3) is then moved back again to the storage shaft (2) or another storage shaft (2) and the piece goods (10) which are not to be removed from the store are pushed into the storage shaft (2).

5. An automated store as claimed in claim 4, **characterised in that** the conveyor device is a conveyor belt extending over the length of the rack (1) or a roller conveyor extending over the length of the rack so that a plurality of delivery positions are defined along the rack (1).

6. An automated store as claimed in claim 5, **characterised in that** the conveyor belt or the roller conveyor is arranged parallel to the storage planes and above the uppermost storage plane.

## Revendications

1. Procédé d'extraction d'au moins un article (10) hors d'un dispositif de stockage, automatisé, pour de multiples articles (10) de nature et dimensions différentes,
dans lequel le dispositif de stockage comprend plusieurs goulottes de stockage (2) disposées côte à côte le long d'une première coordonnée spatiale, un appareil de manipulation (3) déplaçable suivant la première coordonnée spatiale et suivant au moins une seconde coordonnée spatiale s'étendant transversalement à celle-là,
dans lequel l'appareil de manipulation (3) comprend une goulotte d'accumulation (4, 5, 6) qui peut recevoir plusieurs articles (10),
dans lequel le ou les articles (10) à extraire se trouvent en une position connue à l'intérieur d'une rangée d'articles (10) de nature différente contenus dans une goulotte de stockage (2),
selon lequel :
a) une première extrémité de la goulotte d'accumulation (4, 5, 6) est acheminée à une première extrémité de la goulotte de stockage (2),
b) le ou les articles (10) à extraire et l'ensemble des articles (10) présents éventuellement entre la première extrémité de la goulotte de stockage (2) et le ou les articles à extraire sont déplacés jusque dans la goulotte d'accumulation (4, 5, 6),
c) la goulotte d'accumulation (4, 5, 6) est déplacée jusqu'à un emplacement de délivrance pour le transfert d'articles (10), à extraire, à partir de l'appareil de manipulation (3) et le ou les articles (10) à extraire sont déplacés dans l'emplacement de délivrance,
d) la première extrémité de la goulotte d'accumulation (4, 5, 6) est réacheminée à la première extrémité de la même goulotte de stockage ou d'une autre et le ou les articles (10) qui sont restés dans la goulotte d'accumulation (4, 5, 6) sont introduits dans la goulotte de stockage,
**caractérisé**
**en ce que** plusieurs emplacements de délivrance sont aménagés dans le dispositif de stockage en rayonnage, en étant répartis d'une manière à peu près uniforme le long de la première coordonnée spatiale, et des articles (10) transférés aux emplacements de délivrance sont déplacés jusqu'à un dispositif convoyeur (15) s'étendant le long du rayonnage (1),
**en ce que**, pendant l'étape c), la goulotte d'accumulation (4, 5, 6) est acheminée jusqu'à un emplacement de délivrance le plus proche et le ou les articles (10) à extraire sont déplacés dans l'emplacement de délivrance le plus proche à partir de la goulotte d'accumulation (4, 5, 6), et
**en ce que** l'article (10) à extraire ou les articles (10) à extraire est ou sont transportés à partir de l'emplacement de délivrance jusqu'à un emplacement d'évacuation au moyen du dispositif convoyeur (15) s'étendant le long du rayonnage (1).

2. Procédé d'extraction d'un article hors d'un dispositif de stockage automatisé suivant la revendication 1, **caractérisé en ce que** les goulottes de stockage (2) sont des goulottes de stockage inclinées,
et dans lequel la première extrémité de la goulotte de stockage (2) est l'extrémité inférieure et chaque goulotte de stockage (2) comporte à l'extrémité inférieure un organe d'arrêt (12) pour le maintien des articles (10) situés dans la goulotte de stockage (2),
dans lequel, au cours de l'étape b), l'organe d'arrêt (12) est libéré de manière telle que l'article (10) à extraire et l'ensemble des articles (10) se trouvant éventuellement dans la goulotte de stockage (2) au-dessous de l'article (10) à extraire entrent dans la goulotte d'accumulation (4, 5, 6),
dans lequel, au cours de l'étape d), la première extrémité de la goulotte d'accumulation (4, 5, 6) est acheminée à l'extrémité inférieure de la goulotte de stockage (2) et les articles (10) contenus dans la goulotte d'accumulation (4, 5, 6) sont poussés vers le haut dans la goulotte de stockage (2).

3. Procédé d'extraction d'un article hors d'un dispositif de stockage automatisé suivant la revendication 1 ou 2, **caractérisé en ce qu'**il est prévu une bande convoyeuse (15), s'étendant le long de la première coordonnée spatiale du rayonnage, pour la réception d'articles (10) sortant de la goulotte d'accumulation (4, 5, 6), de sorte que de multiples emplacements de délivrance sont formés le long de la bande convoyeuse (15).

4. Dispositif de stockage, automatisé, pour de multiples articles (10) de nature et dimensions différentes,
dans lequel le dispositif de stockage comprend au moins un rayonnage (1), constitué de plusieurs plans de stockage qui comportent chacun plusieurs goulottes de stockage (2) disposées le long d'une première coordonnée spatiale, un appareil de manipulation (3) déplaçable devant le rayonnage suivant la première coordonnée spatiale et suivant au moins une seconde coordonnée spatiale s'étendant transversalement à celle-là, et de multiples emplacements de délivrance qui sont disposés le long du rayonnage (1) en étant répartis d'une manière sensiblement uniforme suivant la première coordonnée spatiale et qui peuvent faire l'objet d'une commande pour le transfert d'articles (10), à extraire, à partir de l'appareil de manipulation (3),
dans lequel des articles (10) de nature différente sont stockés au moins dans une partie des goulottes de stockage (2),
dans lequel l'appareil de manipulation (3) comprend une goulotte d'accumulation (4, 5, 6), qui peut recevoir plusieurs articles (10), et des dispositifs de commande (11) qui sont agencés pour l'extraction d'au moins un article (10) d'une manière telle
- que l'appareil de manipulation (3) est déplacé de façon telle que l'extrémité supérieure de la goulotte d'accumulation (4) se trouve à l'extrémité inférieure de celle des goulottes de stockage (2) dans laquelle est placé un article à extraire, de sorte que le ou les articles (10) à extraire et l'ensemble des articles présents éventuellement entre l'extrémité inférieure de la goulotte de stockage et l'article à extraire sont déplacés jusque dans la goulotte d'accumulation,
- que, ensuite, au moyen des dispositifs de commande (11), l'appareil de manipulation (3), avec la goulotte d'accumulation (4) et les articles (10) qui s'y trouvent, est déplacé jusqu'à l'emplacement de délivrance le plus proche,
- que le ou les articles (10) à extraire sont déplacés hors de la goulotte d'accumulation (4) jusqu'à l'emplacement de délivrance le plus proche, puis que l'article (10) à extraire ou les articles (10) à extraire est ou sont transportés à partir de l'emplacement de délivrance jusqu'à un emplacement d'évacuation au moyen d'un dispositif convoyeur (15) s'étendant le long du rayonnage suivant la première coordonnée spatiale, et
- que, ensuite, l'appareil de manipulation (3) est réacheminé jusqu'à la goulotte de stockage (2) ou une autre goulotte de stockage (2) et les articles (10) qui ne sont pas à extraire sont poussés dans la goulotte de stockage (2).

5. Dispositif de stockage automatisé suivant la revendication 4, **caractérisé en ce que** le dispositif convoyeur est une bande convoyeuse (15) s'étendant sur la longueur du rayonnage (1), ou un convoyeur à rouleaux s'étendant sur la longueur du rayonnage, de sorte que de multiples emplacements de délivrance sont formés le long du rayonnage (1).

6. Dispositif de stockage automatisé suivant la revendication 5, **caractérisé en ce que** la bande convoyeuse ou le convoyeur à rouleaux est disposé parallèlement aux plans de stockage et au-dessus du plan de stockage le plus haut.
